(19) Europäisches Patentamt

European Patent Office

Office européen des brevets

(11) **EP 1 914 742 A2**

(12) **EUROPEAN PATENT APPLICATION**

(43) Date of publication:
**23.04.2008 Bulletin 2008/17**

(51) Int Cl.:
***G11B 7/135*** *(2006.01)*

(21) Application number: **07019653.0**

(22) Date of filing: **08.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **16.10.2006 JP 2006281598**

(71) Applicant: **Funai Electric Co., Ltd.**
**Daito-shi,**
**Osaka 574-0031 (JP)**

(72) Inventor: **Chouji, Hideki**
**Daito-shi**
**Osaka 574-0013 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Method of configuring shape of shape-deformable mirror, optical pickup device, and recording and reproduction unit**

(57) A shape of a mirror face of a shape-deformable mirror that reduces aberration and has a simple configuration is calculated in a simple method. The shape of the mirror face of the shape-deformable mirror 14a is approximately calculated using fourth and fifth terms of the Zernike Polynomials. Furthermore, one of the Zernike coefficients C4 and C5, which configure the fourth and fifth terms of the Zernike Polynomials respectively, is expressed as a value with the other coefficient as a variable by using the following expression:

$$C5/C4 = 2\{1-\cos(2\phi)\}/(\cos(2\phi)+3).$$

The expression is substituted in the Zernike Polynomials, thereby the shape of the mirror face of the shape-deformable mirror 14a is approximated as a linear function, and thus can be calculated in a simple calculation.

FIG. 1

EP 1 914 742 A2

**Description**

Technical Field to which the Invention Belongs

The present invention relates to a method of configuring a shape of a shape-deformable mirror having a mirror for reflecting a beam from a beam source to an objective lens, an optical pickup device, and a recoding and reproduction unit, and particularly relates to a method of configuring a shape of a shape-deformable mirror that corrects aberration by deforming the mirror to be in an optimum shape, an optical pickup device, and a recoding and reproduction unit.

Related Background Art

A recoding and reproduction unit uses an optical pickup device to perform reproduction and recording of data from/into an optical disk such as CD (Compact Disk) or DVD (Digital Versatile Disk). The optical pickup device focuses a beam from a beam source on a read face of the optical disk, reads a reflected beam, and records predetermined data into the optical disk.

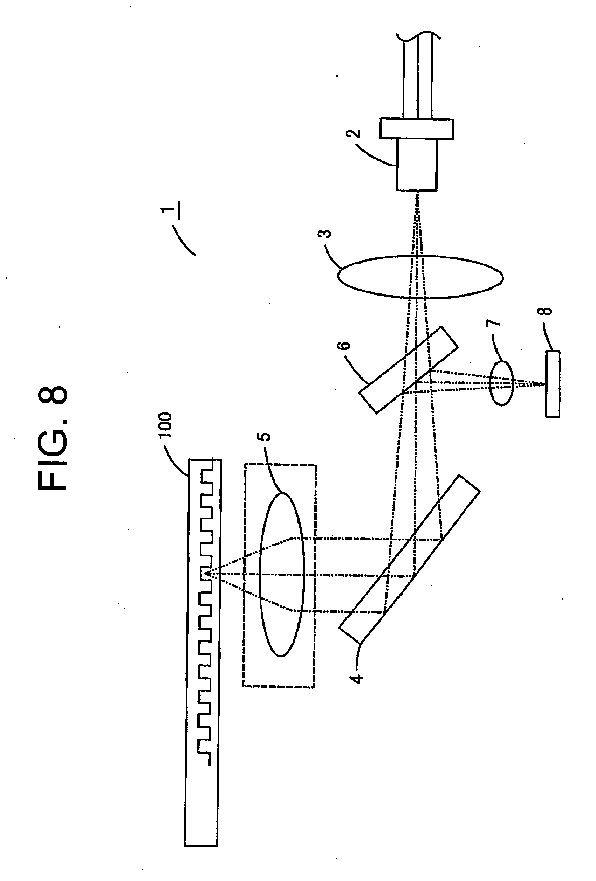

Fig. 8 is a diagram showing a usual optical pickup device 1. From the figure, the optical pickup device 1 is configured by a laser diode 2 for irradiating a beam; a collimator lens 3 that deflects the beam irradiated from the laser diode; a shape-deformable mirror 4 that irradiates a beam transmitted by the collimator lens 3 to an optical disk 100 disposed in an upper side; an objective lens 5 that focuses the beam irradiated from the shape-deformable mirror 4; a half mirror 6 that is disposed between the collimator lens 3 and the shape-deformable mirror 4, and reflects only a beam reflected by a read face of the optical disk 100 to an upper side; a cylindrical lens 7 that focuses the beam reflected by the half mirror 6; and an optical detector 8 that receives the beam focused through the cylindrical lens 7, and converts the beam into a digital signal.

In the above configuration, a beam irradiated from the laser diode 2 is deflected by the collimator lens 3, and then irradiated to the shape-deformable mirror 4 through the half mirror 6. The shape-deformable mirror 4 reflects the irradiated beam to be irradiated to the objective lens 5. At that time, a beam converged on the read face of the optical disk by the objective lens is sometimes not focused on the read face of the optical disk, leading to occurrence of aberration. As a cause of such occurrence of aberration, difference in thickness from a cover face (surface) of the optical disk 100 to the read face, small variation in shape of the objective lens 5 or the shape-deformable mirror 4, and the like are given.

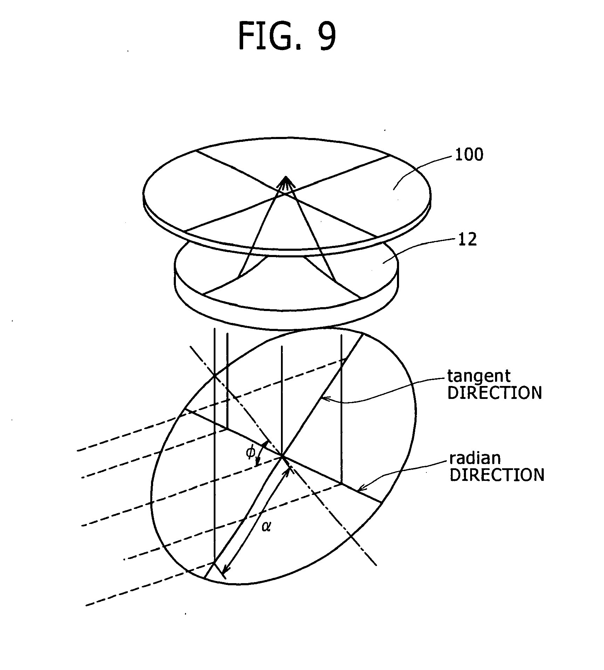

As a method of correcting aberration of a beam, the following has been performed: shapes are deformed to be bent by the same amount in a tangent direction and a radian direction of the shape-deformable mirror so that a reflected beam is corrected and thus aberration is reduced. Fig. 9 is a diagram showing the shape-deformable mirror 4 and a reflection optical path of an injected beam. From the figure, the tangent direction is a direction parallel to a mirror face of the shape-deformable mirror, along which an injection position of a beam closest to a surface of the optical disk 100 among beams injected into the objective lens is connected to an injection position of a beam most distant from the surface among the beams. The radian direction is a direction being parallel to the mirror face, and perpendicular to the tangent direction. However, even if the shapes are deformed to be bent by the same amount in the tangent and radian directions of the shape-deformable mirror, aberration cannot be perfectly corrected in some cases.

JP-A-2006-092602 describes an optical pickup device that may correct aberration of a beam. The optical pickup device has a circular mirror for reflecting a laser beam, and a mirror actuator including first to four piezoelectric elements each of which is adhered to a back of the mirror, has a thickness in a direction perpendicular to a mirror face, and has a fan-shaped face at a side contacting to the back of the mirror. In the optical pickup device, aberration is corrected by the mirror and the four piezoelectric elements. In such an optical pickup device, voltages applied to the four piezoelectric elements are adjusted, thereby a ratio between curvature radius in the tangent direction and curvature radius in the radian direction of a shape of a mirror face can be controlled.

JP-A-2001-034993 describes a technique where a surface of a shape-deformable mirror (reflection mirror in the document) is formed by providing a piezoelectric element that is changed in shape depending on an applied voltage, and a shape of a mirror face of the shape-deformable mirror is changed according to the Zernike Polynomials, so that aberration of a beam is corrected.

Hereinafter, the Zernike Polynomials is described. The Zernike Polynomials is used in approximation of a wavefront of a beam. Since the Zernike Polynomials is known in the art, only general description is made. When a shape W of a mirror face is expressed by $(\xi, \eta)$, the shape W of the mirror face can be expressed as follows by using the Zernike Polynomials.

$$W(\xi, \eta) = \sum_{j} c_{j} Z_{j}(\rho, \theta) \qquad (\xi = \alpha\rho\cos\theta, \quad \eta = \alpha\rho\sin\theta)$$

$W(\xi,\eta)$:    shape of mirror face of shape-deformable mirror
$c_j$ :    Zernike coefficient
$Z_j(\rho,\theta)$:    Zernike Polynomials
$\alpha$:    radius of mirror face of shape-deformable mirror
$\rho$:    normalized radius
$\theta$:    deviation angle

Thus, approximation of the shape of the mirror face can be made by using the radius of mirror face $\alpha$, deviation angle $\theta$, normalized radius $\rho$, and furthermore Zernike coefficient $C_j$. Furthermore, since each term is a polynomial, it has certain meaning and therefore can be independently used. In the JP-A-2001-034993 as cited document 2, sixth and seventh terms are used for approximation of the shape of the mirror face, thereby aberration of light is reduced.

In an invention of the JP-A-2006-092602 as patent document 1, there has been the following difficulty. That is, since the four piezoelectric elements are used to change the shape of the mirror face, a configuration of the reflection mirror becomes complicated, leading to cost increase. Moreover, aberration may not be perfectly removed only by simply changing the ratio between the curvature radius in the tangent direction and the curvature radius in the radian direction.

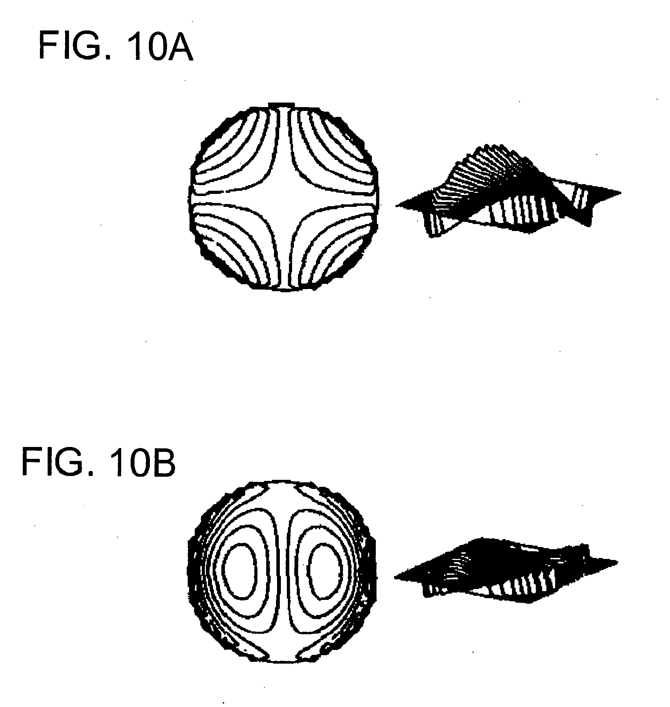

In an invention of the JP-A-2001-034993 as patent document 2, there has been the following difficulty. While the piezoelectric film elements are used to represent shapes expressed by the sixth and seventh terms of the Zernike Polynomials respectively so that coma aberration is reduced, since the shapes of faces expressed by the sixth and seventh terms of the Zernike Polynomials are complicated, they can be represented only by using the piezoelectric film elements. Figs. 10A and 10B are diagrams showing the shapes of faces expressed by the sixth and seventh terms of the Zernike Polynomials. In the figures, Fig. 10A shows a wavefront expressed by the sixth term, and Fig. 10B shows a wavefront expressed by the seventh term. From the Fig. 10B, the wavefront expressed by the seventh term of the Zernike Polynomials is in a shape having difference in height so as to form opposed portions across a central portion. Furthermore, a further complicated shape is formed by a combination of the shape given by the seventh term and the shape given by the sixth term. Therefore, complicated control is required to form a shape-deformable mirror having the above shape.

Furthermore, since the Zernike coefficients C6 and C7, which configure the sixth and seventh terms of the Zernike Polynomials, are variables respectively, when a shape of a mirror face is calculated, the shape needs to be calculated by using an expression with the Zernike coefficients C6 and C7 as variables. Therefore, the shape of the mirror face cannot be simply calculated.

Disclosure of the Invention

In view of foregoing, it is desirable to provide a method of configuring a shape-deformable mirror, by which a shape of a mirror face of the shape-deformable mirror, which may reduce aberration and has a simple configuration, can be calculated in a simple method, and an optical pickup device using the shape-deformable mirror, and furthermore a recording/reproduction unit using the optical pickup device.

In an aspect of an embodiment of the invention, in a method of configuring a shape of a shape-deformable mirror for reflecting a beam ejected from a beam source to an objective lens, the shape-deformable mirror is made such that a shape of a mirror face is calculated by using fourth and fifth terms of the following Zernike Polynomials in order to reduce aberration of a reflected beam.

$$W(\xi,\eta) = \sum_j c_j Z_j(\rho,\theta) \qquad (\xi = \alpha\rho\cos\theta, \quad \eta = \alpha\rho\sin\theta)$$

$W(\xi,\eta)$:    shape of mirror face of shape-deformable mirror
$c_j$:    Zernike coefficient
$Z_j(\rho,\theta)$:    Zernike Polynomials
$\alpha$:    radius of mirror face of shape-deformable mirror
$\rho$:    normalized radius
$\theta$:    deviation angle

In the embodiment of the invention configured as above, the shape of the mirror face of the shape-deformable mirror is calculated by using the fourth and fifth terms of the Zernike Polynomials in order to reduce aberration of a focused beam. Therefore, the shape of the mirror face can be calculated by a simple expression using the radius of

mirror face $\alpha$, deviation angle $\theta$, normalized radius $\rho$, and furthermore Zernike coefficients C4 and C5.

In the calculation of the shape of the mirror face of the shape-deformable mirror using the Zernike Polynomials, as variables for calculating the shape-deformable mirror, the Zernike coefficients C4 and C5 are used. Therefore, the Zernike coefficients C4 and C5 are connected with each other, thereby the number of variables for calculating the shape of the shape-deformable mirror is further decreased so that the shape of the mirror face of the shape-deformable mirror can be calculated by a further simple expression.

Therefore, preferably, the Zernike coefficients C4 and C5, which configure the fourth and fifth terms of the Zernike Polynomials respectively, are configured to satisfy the following expression.

$$\frac{C_5}{C_4} = \frac{2\{1 - \cos(2\phi)\}}{\cos(2\phi) + 3}$$

$C_4$ :     fourth term of Zernike Polynomials

$C_5$ :     fifth term of Zernike Polynomials

In the embodiment of the invention configured as above, a relationship between C4 and C5 is expressed by using the above expression. Thus, one of the Zernike coefficients C4 and C5 is expressed by a calculation formula with the other coefficient as a variable. By using the relational expression of the Zernike coefficients C4 and C5, the number of variables of the expression for calculating the mirror face can be further decreased. Thus, the shape of the mirror face of the shape-deformable mirror that may reduce aberration is calculated by a linear expression with the C4 or C5 as a variable according to the Zernike Polynomials. Therefore, the shape of the shape-deformable mirror can be easily simulated using a primary variable.

Furthermore, as another aspect of an embodiment of the invention, in an optical pickup device that reflects a laser beam ejected from a laser diode to an objective lens using a shape-deformable mirror, and focuses the laser beam on a read face of an optical disk using the objective lens, the shape-deformable mirror reduces aberration through calculation of a shape of a mirror face by using fourth and fifth terms of the following Zernike Polynomials in order to reduce aberration.

$$W(\xi, \eta) = \sum_j c_j Z_j(\rho, \theta) \qquad (\xi = \alpha\rho\cos\theta, \quad \eta = \alpha\rho\sin\theta)$$

$W(\xi,\eta)$:     shape of mirror face of shape-deformable mirror
$c_j$:              Zernike coefficient
$Z_j(\rho,\theta)$:     Zernike Polynomials
$\alpha$:          radius of mirror face of shape-deformable mirror
$\rho$:          normalized radius
$\theta$:          deviation angle

In the embodiment of the invention configured as above, the optical pickup device can correct spherical aberration in a simple structure by using the shape-deformable mirror of which the shape can be calculated by the above expression.

Furthermore, preferably, the Zernike coefficients C4 and C5, which configure the fourth and fifth terms of the Zernike Polynomials respectively, satisfy the following expression.

$$\frac{C_5}{C_4} = \frac{2\{1 - \cos(2\phi)\}}{\cos(2\phi) + 3}$$

$C_4$:    fourth term of Zernike Polynomials

$C_5$:    fifth term of Zernike Polynomials

In the embodiment of the invention configured as above, aberration of a beam to be focused can be reduced in a simple structure by using the shape-deformable mirror having a mirror face calculated by a simple expression.

As still another aspect of an embodiment of the invention, in a recording/reproduction unit having an optical pickup device that reflects a laser beam ejected from a laser diode to an objective lens using a shape-deformable mirror, and focuses the laser beam on a read face of an optical disk using the objective lens, and a control section that controls a shape of the shape-deformable mirror, the shape-deformable mirror reduces aberration through calculation of a shape of a mirror face by using fourth and fifth terms of the following Zernike Polynomials:

$$W(\xi, \eta) = \sum_{j} c_j Z_j(\rho, \theta) \qquad (\xi = \alpha\rho\cos\theta, \quad \eta = \alpha\rho\sin\theta)$$

$W(\xi, \eta)$:    shape of mirror face of shape-deformable mirror
$c_j$ :    Zernike coefficient
$Z_j(\rho, \theta)$:    Zernike Polynomials
$\alpha$:    radius of mirror face of shape-deformable mirror
$\rho$:    normalized radius
$\theta$:    deviation angle; and

the Zernike coefficients C4 and C5, which configure the fourth and fifth terms of the Zernike Polynomials respectively, satisfy the following expression:

$$\frac{C_5}{C_4} = \frac{2\{1 - \cos(2\phi)\}}{\cos(2\phi) + 3}$$

$C_4$:    fourth term of Zernike Polynomials
$C_5$ :    fifth term of Zernike Polynomials.

It will be appreciated that such a more specific configuration exhibits the same advantages as those in the above embodiments of inventions.

Brief Description of the Drawings

Fig. 1 is a block diagram of an optical pickup device 10 of an embodiment of the invention;
Fig. 2 is a Table showing expressions of j=1 to 20 of the Zernike Polynomials $Z_j(\rho, \theta)$ respectively;
Fig. 3 is a diagram of a wavefront expressed by the fourth term of the Zernike Polynomials;
Fig. 4 is a diagram of a wavefront expressed by the fifth term of the Zernike Polynomials;
Fig. 5 is a diagram showing values of aberration in each of cases that an injection angle is 30 degrees, 45 degrees, 60 degrees, and 75 degrees;
Fig. 6 is a block diagram of a recording/reproduction unit using the optical pickup device of an embodiment of the invention;
Fig. 7 is a block diagram showing another recording/reproduction unit using the optical pickup device of an embodiment of the invention;
Fig. 8 is a diagram showing a usual optical pickup device;
Fig. 9 is a diagram showing a shape-deformable mirror and a reflection optical path of an injected beam; and
Figs. 10A and 10B are diagrams showing wavefronts expressed by sixth and seventh terms of the Zernike Polynomials respectively.

Description of Special Embodiment

Hereinafter, embodiments of the invention are described according to the following order with reference to drawings. Like references are used for like or corresponding portions in the drawings, and the portions are not repeatedly described.

1. Optical pickup device

    1-1. Configuration of optical pickup device
    1-2. Method of calculating mirror face of shape-deformable mirror

2. Embodiments
3. Conclusion

1. Optical pickup device

1-1. Configuration of optical pickup device

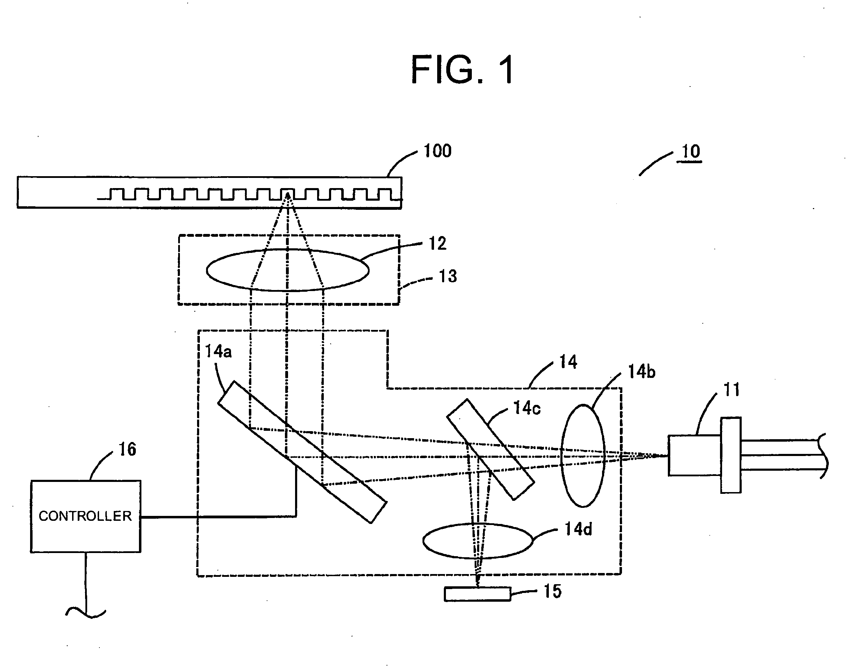

Hereinafter, a configuration of an optical pickup device 10 is described with reference to Figs. 1 to 5. Fig. 1 is a block diagram of the optical pickup device 10 of an embodiment of the invention. The optical pickup device 10 focuses an irradiated laser beam to a small-pit group formed on a read face of an optical disk 100, and converts the laser beam reflected by the optical disk 100 into a digital signal and reads the signal.

To achieve a function as above, the optical pickup device 10 is configured by a laser diode 11 for irradiating a laser beam; an objective lens 12 for focusing an injected laser beam; a lens holder 13 for holding the objective lens 12; an optical system 14 that deflects the laser beam irradiated from the laser diode 11, and irradiates the laser beam to the objective lens 12; and a detector 15 that detects the laser beam reflected by the optical disk 100. While there is one objective lens in the embodiment of the invention, the number of objective lenses is not limited to one, and can be appropriately changed depending on applications.

The optical system 14 is configured by a collimator lens 14b for deflecting the laser beam irradiated from the laser diode 11; a shape-deformable mirror 14a for reflecting the deflected beam to an optical disk side; and a half mirror 14c that is situated between the laser diode 11 and the shape-deformable mirror 14a, and transmits the laser beam from the laser diode 11, but reflects the laser beam reflected by the optical disk 100. According to the above configuration, the laser beam irradiated from the laser diode 11 is deflected by the collimator lens 14b, and then reflected in a direction approximately 45 degrees upward by the shape-deformable mirror 14a, and thereby irradiated to the objective lens 12. The objective lens 12 focuses the irradiated laser beam on the read face of the optical disk 100. A beam reflected via the half mirror 14c is injected into the detector 15 through a cylindrical lens 14d.

The shape-deformable mirror 14a is deformed in shape depending on an applied voltage, and focuses a beam to each read face of the optical disk. Specifically, the optical disk 100 is formed with read faces including a plurality of layers, and the shape-deformable mirror 14a is changed in shape so as to change an optical path of a reflected beam so that the objective lens 12 can focus the beam on each read face. Furthermore, the shape-deformable mirror 14a used in the embodiment of the invention is changed in shape of a mirror face to correspond to a face calculated by the Zernike Polynomials, so that aberration of the beam to be focused on the read face is reduced.

As the shape-deformable mirror 14a used according to an embodiment of the invention, any mirror can be used as long as it may be deformed in the tangent and radian directions depending on an applied voltage, and a shape of a mirror face for receiving a beam may be changed to be similar to a shape of a wavefront calculated by the Zernike Polynomials. Therefore, the shape-deformable mirror 14a is connected to a controller 16 for changing the shape of the mirror face, and changed in shape according to control by the controller 16. Moreover, a lateral cross section of a mirror portion of the shape-deformable mirror 14a desirably has a circular shape since the wavefront expressed by the Zernike Polynomials has a circular shape.

Hereinafter, a function of the optical pickup device having the above configuration is described. A laser beam irradiated from the laser diode 11 is deflected by the collimator lens 14b, and then irradiated to the shape-deformable mirror 14a. The shape-deformable mirror 14a reflects the injected beam at approximately 45 degrees and irradiates the beam to the objective lens 12. At that time, a shape of the shape-deformable mirror 14a is deformed, and the shape of the mirror face for receiving the beam is changed to correspond to the shape of the face calculated by the Zernike Polynomials as described above, resulting in reduction in aberration of the beam focused on the read face by the objective lens 12.

The laser beam irradiated to the read face of the optical disk 100 according to the above method is reflected by the read face, and injected into the half mirror 14c through the same path as an injection path. The half mirror 14c may reflect the injected laser beam so as to eject the beam to a detector 15 side. The detector 15 reads the injected laser beam and converts the beam into a digital signal, and then outputs the signal. Thus, the optical pickup device 10 reads data in the optical disk 100. The detector 15 in the embodiment of the invention uses a photodiode to convert the laser beam into the digital signal.

1-2. Method of calculating shape of mirror face of shape-deformable mirror

Next, a specific method of calculating the shape of the mirror face of the shape-deformable mirror 14a is described. The shape W of the mirror face of the shape-deformable mirror 14a is calculated as follows by using the Zernike Polynomials.

$$W(\xi, \eta) = \sum_j c_j Z_j(\rho, \theta) \quad (\xi = \alpha\rho\cos\theta, \quad \eta = \alpha\rho\sin\theta) \quad (1)$$

$W(\xi, \eta)$:     shape of mirror face of shape-deformable mirror
$c_j$:     Zernike coefficient
$Z_j(\rho, \theta)$:     Zernike Polynomials
$\alpha$:     radius of mirror face of shape-deformable mirror
$\rho$:     normalized radius
$\theta$:     deviation angle

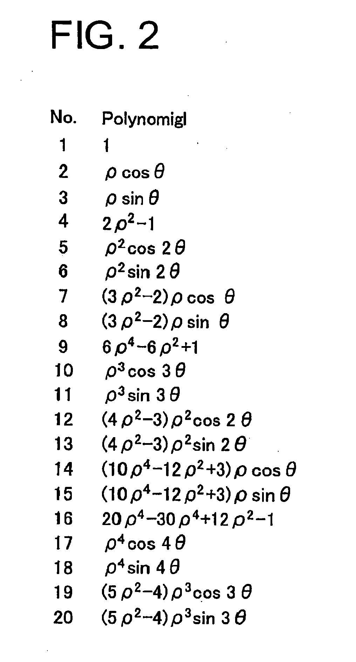

Since the expression (1) is a polynomial, it has a certain feature for approximation of a mirror face in each term j=1 or more. Fig. 2 is a table showing expressions in J=1 to 20 of the Zernike Polynomials $Z_j(\rho, \theta)$ respectively. From the figure, fourth and fifth terms of the Zernike Polynomials $Z_j(\rho, \theta)$ are as follows respectively.

$$Z_4 = 2\rho^2 - 1$$
$$Z_5 = \rho^2 \cos 2\theta \quad (2)$$

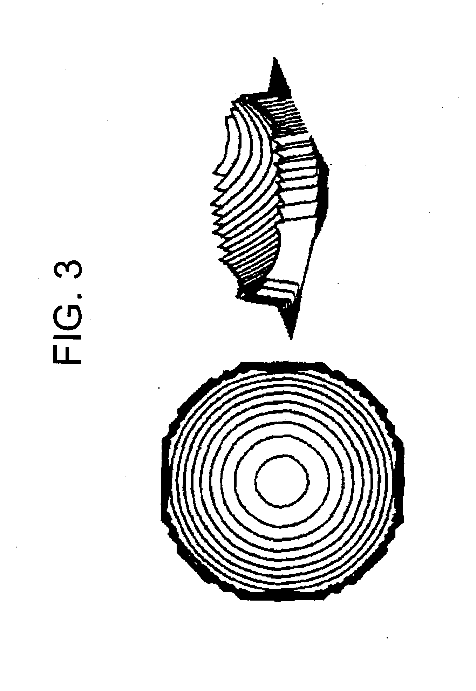

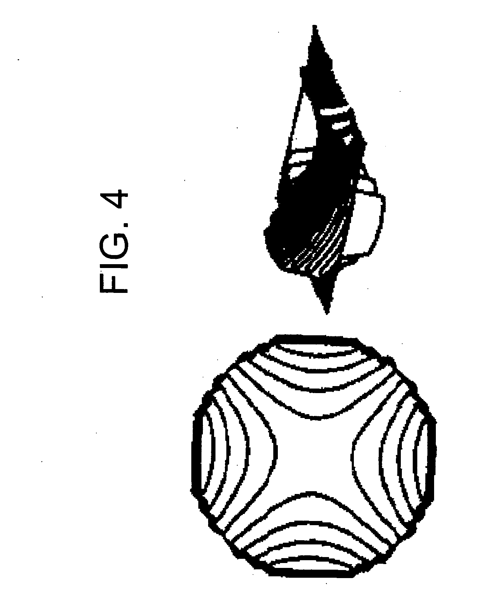

The fourth and fifth terms express shapes of the shape-deformable mirror 14a as in Figs. 3 and 4. Fig. 3 is a diagram of a wavefront expressed by the fourth term of the Zernike Polynomials. Fig. 4 is a diagram of a wavefront expressed by the fifth term of the Zernike Polynomials.

The shape W $(\xi, \eta)$ of the mirror face of the shape-deformable mirror 14a can be expanded as follows.

$$W(\xi, \eta) = C_4(2\rho^2 - 1) + C_5(\rho^2 \cos 2\theta)$$
$$= (2C_4 + C_5 \cos 2\theta)\rho^2 - C_4 \quad (3)$$

At that time, $\theta = 0°$ is substituted in the above expression, so that the curvature radius in the radian direction can be calculated, and the following expression is given.

$$2*C4+C5 \quad (4)$$

Moreover, θ =90° is substituted therein, so that the curvature radius in the tangent direction can be calculated, and the following expression is given.

$$2*C4-C5 \qquad (5)$$

The ratio of the curvature radius in the radian direction to the curvature radius in the tangent direction is given by the following expression.

$$\{\cos(2\Phi)+1\}/2 \qquad (6)$$

Therefore, a relationship between the expression (4) and the expression (5) is given as follows by using the expression (6) .

$$\{\cos(2\Phi)+1\}/2(2C4+C5)=2C4-C5$$

This is arranged with the C4 and C5, and consequently the following expression is given.

$$\frac{C_5}{C_4} = \frac{2\{1-\cos(2\phi)\}}{\cos(2\phi)+3} \qquad (7)$$

$C_4$:    fourth term of Zernike Polynomials
$C_5$:    fifth term of Zernike Polynomials

From the above, a relational expression between the Zernike coefficients C4 and C5 is calculated.

According to the relationship between the Zernike coefficients C4 and C5, one of the C5 and C4 is calculated as a value with the other (C5 for C4, or C4 for C5) as a variable by using the expression (7). Thus, when the shape of the mirror face of the shape-deformable mirror 14a is calculated using the Zernike Polynomials (1), the shape W (ξ, η) of the mirror face can be calculated as a linear expression of C4 or C5. Thus, when the shape of the mirror face of the shape-deformable mirror 14a that reduces aberration of a beam is calculated, the shape of the mirror face can be expressed as a linear expression using C4 or C5 as a variable.

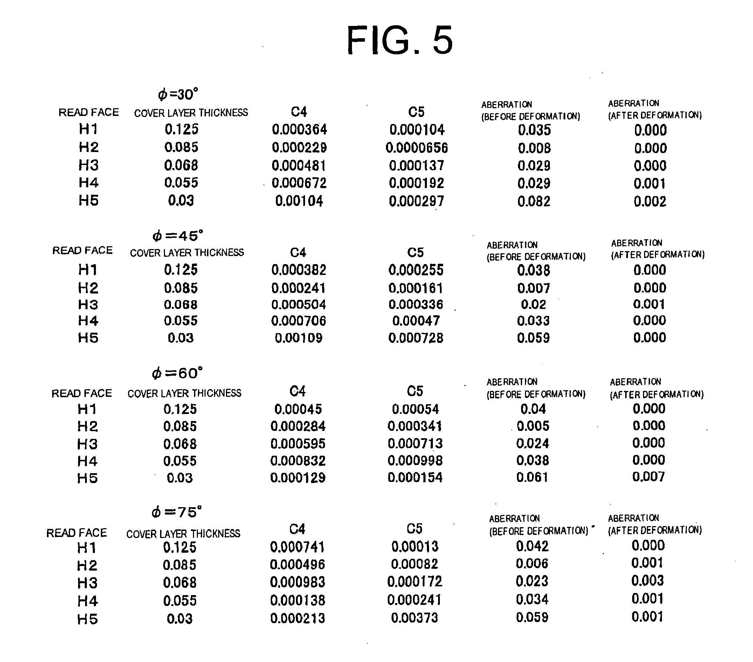

Next, values of aberration are described using Fig. 5, the values having been reduced by using the shape-deformable mirror 14a calculated according to the above method. Fig. 5 is a diagram showing values of aberration in respective cases that an injection angle φ is 30 degrees, 45 degrees, 60 degrees and 75 degrees. An injection angle φ injected into the shape-deformable mirror 14a is typically 45 degrees. As the optical disk 100 to be used, DVD having read faces including five layers is used, wherein cover layer thickness as a distance to each of the read faces is as follows: H1 is 0.125, H2 is 0.085, H3 is 0.068, H4 is 0.055, and H5 is 0.030 (mm). A distance WD from an objective lens to a surface of the DVD is set to be 1.3 (mm).

From Fig. 5, in a case that the injection angle φ is 45°, reduction in aberration in each of layers H1 to H5 is as follows. The aberration is reduced from 0.038 to 0.00 in the layer H1, 0.007 to 0.000 in H2, 0.02 to 0.001 in H3, 0.033 to 0.000 in H4, and 0.059 to 0.000 in H5 (mλ). Similarly, in cases that the injection angle φ is 30°, 60°, and 75°, aberration in each layer is reduced.

2. Embodiments

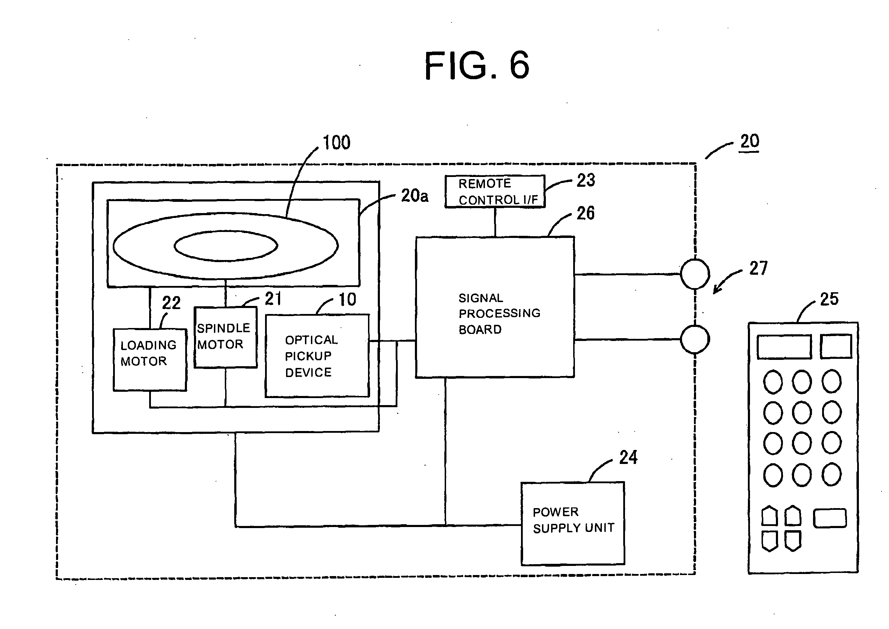

Hereinafter, description is made on an embodiment where the optical pickup device 10 according to the invention is used. Fig. 6 is a block diagram of a recording/reproduction unit using the optical pickup device of an embodiment of the invention. The recording/reproduction unit 20 performs recording of data to be recorded in the optical disk 100 such as DVD or CD and reproduction of the recorded data.

From the figure, the recording/reproduction unit 20 is configured by the optical pickup device 10 of an embodiment of the invention; a spindle motor 21 for rotating the optical disk 100; a loading motor 22 for loading a tray 20a on which the optical disk is set; a signal processing board 26 for performing reproduction or recording of data from/into the optical disk; a power supply unit 24 for power supplying; and a remote control I/F 23 for receiving an operation signal from a remote control unit 25.

Operation of the recording/reproduction unit 20 is described below. When the optical disk 100 is set on the tray 20a and the remote control unit 25 is operated, the remote control I/F 23 reads an operation signal outputted from the remote control unit 25, and outputs the signal to the signal processing board 26. The signal processing board 26 accepts an operation instruction from the remote control unit 25 via the remote control I/F 23, and thereby drives the loading motor 22 so as to accommodate the tray 20a in the recording/reproduction unit 20. Then, the signal processing board 26 drives the spindle motor 21 to rotate the optical disk 100.

Furthermore, the optical pickup device 10 is moved to follow pits on the optical disk 100 being rotated so as to read data in the optical disk 100. At that time, the optical pickup device 10 deforms the shape of the mirror face to reduce aberration of a beam focused on the read face of the optical disk 100. Then, the read data are outputted to the signal processing board 26, and subjected to signal processing therein and then outputted to external equipment via an input/output terminal 27. Here, the external equipment is an output device for outputting data to be outputted through the input/output terminal, including a monitor, projector, and personal computer. Since a configuration of the signal processing board 26 is known in the art, it is omitted to be described.

While the recording/reproduction unit 20 is separately operated to achieve a function, an embodiment where the optical pickup device 10 is used is not limited to an apparatus that is separately operated to achieve a function, and an apparatus to be incorporated in a product may be used. Therefore, as an example of a second embodiment, description is made on a recording/reproduction unit 30 that uses the optical pickup device 10 of an embodiment of the invention. The recording/reproduction unit 30 is incorporated in a product such as personal computer, and performs reproduction of data in the optical disk 100 and recording of obtained data. It is appreciated that the product, in which the recording/reproduction unit 30 is incorporated, is not limited to the personal computer, and the unit can be incorporated in any product if it uses the optical pickup device 10 of an embodiment of the invention.

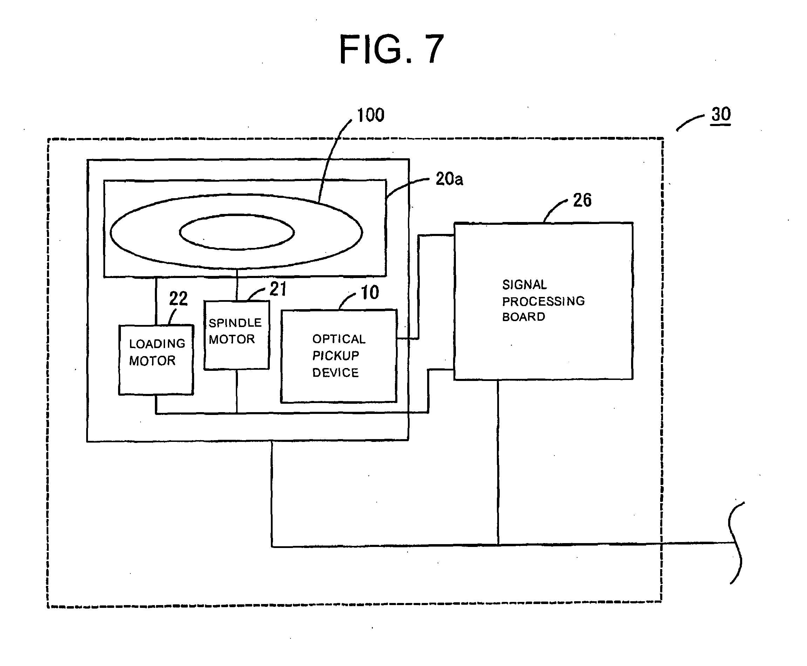

Fig. 7 is a block diagram showing a recording/reproduction unit using the optical pickup device 10 of an embodiment of the invention. From the figure, the recording/reproduction unit 30 is configured by the optical pickup device 10 of an embodiment of the invention; a spindle motor 21 for rotating the optical disk 100; a loading motor 22 for loading a tray on which the optical disk is set; and a signal processing board 26 for performing control for reproducing data in the optical disk or recording obtained data into the optical disk 100.

Since each of blocks as described above has the same functions as those in the first embodiment, each of the functions is omitted to be described here. The recording/reproduction unit 30 receives an instruction from a control section such as a microcomputer disposed outside the unit 30, and accordingly performs read of data in the optical disk 100 and recording of obtained data using the optical pickup device 10.

(3) Conclusion As describe hereinbefore, the shape of the mirror face for receiving a beam of the shape-deformable mirror 14a is approximately calculated by using the fourth and fifth terms of the Zernike Polynomials. Furthermore, one of the Zernike coefficients C4 and C5, which configure the fourth and fifth terms of the Zernike Polynomials respectively, has a value with the other as a variable according the expression (7). The expression (7) is substituted in the expression (1), thereby the shape of the mirror face of the shape-deformable mirror 14a is easily calculated. Moreover, the optical pickup device 10 using the shape-deformable mirror 14a is used, thereby aberration can be reduced in a simple structure.

It will be appreciated that the invention is not limited to the above examples. While it is obvious for those skilled in the art, the followings can be disclosed as an example of the invention:

- use of members and configurations, which can mutually replace the members and the configurations disclosed in the examples, with a combination of them being appropriately changed;
- appropriate replacement by members and configurations, which are known in the art and can mutually replace the members and the configurations disclosed in the examples while not disclosed in the above examples, or use of such members and configurations with a combination of them being changed; and
- appropriate replacement by members and configurations, which may be assumed as substitutes of the members and the configurations disclosed in the examples by those skilled in the art based on a known technique and the like, while not disclosed in the above examples, or use of such members and configurations with a combination of them being changed.

**Claims**

1. A recording and reproduction unit, comprising
an optical pickup device that reflects a laser beam ejected from a laser diode to an objective lens using a shape-deformable mirror, and focuses the laser beam on a read face of an optical disk using the objective lens, and
a control section that controls a shape of the shape-deformable mirror:

   the shape-deformable mirror reduces aberration through calculation of a shape of a mirror face by using fourth and fifth terms of the following Zernike Polynomials:

$$W(\xi, \eta) = \sum_{j} c_j Z_j(\rho, \theta) \qquad (\xi = \alpha\rho\cos\theta, \quad \eta = \alpha\rho\sin\theta)$$

   $W(\xi,\eta)$: shape of mirror face of shape-deformable mirror
   $c_j$ : Zernike coefficient
   $Z_j(\rho,\theta)$: Zernike Polynomials
   $\alpha$: radius of mirror face of shape-deformable mirror
   $\rho$: normalized radius
   $\theta$: deviation angle; and

   the Zernike coefficients C4 and C5, which configure the fourth and fifth terms of the Zernike Polynomials respectively, satisfy the following expression;

$$\frac{C_5}{C_4} = \frac{2\{1 - \cos(2\phi)\}}{\cos(2\phi) + 3}$$

   $C_4$: fourth term of Zernike Polynomials
   $C_5$: fifth term of Zernike Polynomials.

2. A method of configuring a shape of a shape-deformable mirror that reflects a beam ejected from a beam source to an objective lens:

   the shape-deformable mirror is made such that a shape of a mirror face is calculated by using fourth and fifth terms of the following Zernike Polynomials in order to reduce aberration of a reflected beam;

$$W(\xi, \eta) = \sum_{j} c_j Z_j(\rho, \theta) \qquad (\xi = \alpha\rho\cos\theta, \quad \eta = \alpha\rho\sin\theta)$$

   $W(\xi, \eta)$: shape of mirror face of shape-deformable mirror
   $c_j$ : Zernike coefficient
   $Z_j(\rho, \theta)$: Zernike Polynomials
   $\alpha$: radius of mirror face of shape-deformable mirror
   $\rho$: normalized radius
   $\theta$: deviation angle.

3.  The method of configuring the shape of the shape-deformable mirror according to claim 2:

    the Zernike coefficients C4 and C5, which configure the fourth and fifth terms of the Zernike Polynomials respectively, satisfy the following expression;

$$\frac{C_5}{C_4} = \frac{2\{1 - \cos(2\phi)\}}{\cos(2\phi) + 3}$$

$C_4$ : fourth term of Zernike Polynomials
$C_5$ : fifth term of Zernike Polynomials.

4.  An optical pickup device that reflects a laser beam ejected from a laser diode to an objective lens using a shape-deformable mirror, and focuses the laser beam on a read face of an optical disk using the objective lens:

    the shape-deformable mirror reduces aberration through calculation of a shape of a mirror face by using fourth and fifth terms of the following Zernike Polynomials;

$$W(\xi, \eta) = \sum_j c_j Z_j(\rho, \theta) \qquad (\xi = \alpha\rho\cos\theta, \quad \eta = \alpha\rho\sin\theta)$$

$W(\xi,\eta)$: shape of mirror face of shape-deformable mirror
$c_j$ : Zernike coefficient
$Z_j(\rho,\theta)$: Zernike Polynomials
$\alpha$: radius of mirror face of shape-deformable mirror
$\rho$: normalized radius
$\theta$: deviation angle.

5.  The optical pickup device according to claim 4:

    the Zernike coefficients C4 and C5, which configure the fourth and fifth terms of the Zernike Polynomials respectively, satisfy the following expression;

$$\frac{C_5}{C_4} = \frac{2\{1 - \cos(2\phi)\}}{\cos(2\phi) + 3}$$

$C_4$ : fourth term of Zernike Polynomials
$C_5$ : fifth term of Zernike Polynomials.

FIG. 1

# FIG. 2

| No. | Polynomigl |
|-----|-----------|
| 1 | $1$ |
| 2 | $\rho \cos \theta$ |
| 3 | $\rho \sin \theta$ |
| 4 | $2\rho^2 - 1$ |
| 5 | $\rho^2 \cos 2\theta$ |
| 6 | $\rho^2 \sin 2\theta$ |
| 7 | $(3\rho^2 - 2)\rho \cos \theta$ |
| 8 | $(3\rho^2 - 2)\rho \sin \theta$ |
| 9 | $6\rho^4 - 6\rho^2 + 1$ |
| 10 | $\rho^3 \cos 3\theta$ |
| 11 | $\rho^3 \sin 3\theta$ |
| 12 | $(4\rho^2 - 3)\rho^2 \cos 2\theta$ |
| 13 | $(4\rho^2 - 3)\rho^2 \sin 2\theta$ |
| 14 | $(10\rho^4 - 12\rho^2 + 3)\rho \cos \theta$ |
| 15 | $(10\rho^4 - 12\rho^2 + 3)\rho \sin \theta$ |
| 16 | $20\rho^4 - 30\rho^4 + 12\rho^2 - 1$ |
| 17 | $\rho^4 \cos 4\theta$ |
| 18 | $\rho^4 \sin 4\theta$ |
| 19 | $(5\rho^2 - 4)\rho^3 \cos 3\theta$ |
| 20 | $(5\rho^2 - 4)\rho^3 \sin 3\theta$ |

FIG. 3

FIG. 4

# FIG. 5

$\phi = 30°$

| READ FACE | COVER LAYER THICKNESS | C4 | C5 | ABERRATION (BEFORE DEFORMATION) | ABERRATION (AFTER DEFORMATION) |
|---|---|---|---|---|---|
| H1 | 0.125 | 0.000364 | 0.000104 | 0.035 | 0.000 |
| H2 | 0.085 | 0.000229 | 0.0000656 | 0.008 | 0.000 |
| H3 | 0.068 | 0.000481 | 0.000137 | 0.029 | 0.000 |
| H4 | 0.055 | 0.000672 | 0.000192 | 0.029 | 0.001 |
| H5 | 0.03 | 0.00104 | 0.000297 | 0.082 | 0.002 |

$\phi = 45°$

| READ FACE | COVER LAYER THICKNESS | C4 | C5 | ABERRATION (BEFORE DEFORMATION) | ABERRATION (AFTER DEFORMATION) |
|---|---|---|---|---|---|
| H1 | 0.125 | 0.000382 | 0.000255 | 0.038 | 0.000 |
| H2 | 0.085 | 0.000241 | 0.000161 | 0.007 | 0.000 |
| H3 | 0.068 | 0.000504 | 0.000336 | 0.02 | 0.001 |
| H4 | 0.055 | 0.000706 | 0.00047 | 0.033 | 0.000 |
| H5 | 0.03 | 0.00109 | 0.000728 | 0.059 | 0.000 |

$\phi = 60°$

| READ FACE | COVER LAYER THICKNESS | C4 | C5 | ABERRATION (BEFORE DEFORMATION) | ABERRATION (AFTER DEFORMATION) |
|---|---|---|---|---|---|
| H1 | 0.125 | 0.00045 | 0.00054 | 0.04 | 0.000 |
| H2 | 0.085 | 0.000284 | 0.000341 | 0.005 | 0.000 |
| H3 | 0.068 | 0.000595 | 0.000713 | 0.024 | 0.000 |
| H4 | 0.055 | 0.000832 | 0.000998 | 0.038 | 0.000 |
| H5 | 0.03 | 0.000129 | 0.000154 | 0.061 | 0.007 |

$\phi = 75°$

| READ FACE | COVER LAYER THICKNESS | C4 | C5 | ABERRATION (BEFORE DEFORMATION) | ABERRATION (AFTER DEFORMATION) |
|---|---|---|---|---|---|
| H1 | 0.125 | 0.000741 | 0.00013 | 0.042 | 0.000 |
| H2 | 0.085 | 0.000496 | 0.00082 | 0.006 | 0.001 |
| H3 | 0.068 | 0.000983 | 0.000172 | 0.023 | 0.003 |
| H4 | 0.055 | 0.000138 | 0.000241 | 0.034 | 0.001 |
| H5 | 0.03 | 0.000213 | 0.00373 | 0.059 | 0.001 |

EP 1 914 742 A2

# FIG. 6

EP 1 914 742 A2

# FIG. 7

# FIG. 8

# FIG. 9

FIG. 10A

FIG. 10B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006092602 A

- JP 2001034993 A